# EUROPEAN PATENT APPLICATION

(11) **EP 4 576 005 A1**
(43) Date of publication of application: **25.06.2025**
(21) Application number: 24193905.7
(22) Date of filing: 09.08.2024
(51) Int. Cl.: G06V 10/10, G06V 10/26, G06V 20/58, G06V 20/70

(54) **METHOD AND APPARATUS WITH MOVING OBJECT VIEW IMAGE PROCESSING**

(30) Priority: 21.12.2023 KR 20230188695
(71) Applicant: SAMSUNG ELECTRONICS CO., LTD., Yeongtong-gu Suwon-si, Gyeonggi-do 16677 (KR)
(72) Inventor: LEE, Jaewoo, 16678 Suwon-si (KR); SUNG, Kapje, 16678 Suwon-si (KR); PARK, Daeul, 16678 Suwon-si (KR); JEON, Younghan, 16678 Suwon-si (KR); JI, Dae Hyun, 16678 Suwon-si (KR)
(74) Representative: Arnold & Siedsma

(57) **Abstract**

A method and apparatus with moving object view image processing is provided. The method includes generating a first view image of a first moving object view and a second view image of a second moving object view, determining a first occlusion region in the first view image by an obstacle in the first view, and determining a second occlusion region in the second view image by an obstacle in the second view, determining a first temporary boundary of the obstacle in the first view with respect to a first overlap region between the first view and the second view, based on the first occlusion region, determining a second temporary boundary of the obstacle in the second view with respect to the first overlap region, based on the second occlusion region, and generating a top-view image of the moving object based on the first and second temporary boundaries.

## Description

### BACKGROUND

### 1. Field

The following description relates to a method and apparatus with view image processing moving objects.

### 2. Description of Related Art

Currently, many vehicles are equipped with a surround view monitor (SVM) system to enable parking assistance. The SVM system may provide a top-view image by synthesizing images of fisheye cameras installed in various directions. A driver may recognize objects in a region, which are invisible with the naked eye, through the SVM system. Additionally, the SVM system may be implemented in an application scenario such as parking.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In a general aspect, a processor-implemented method includes receiving a first view image of a first moving object view and receiving a second view image of a second moving object view; determining a first occlusion region in the first moving object view image based on an obstacle in the first moving object view, and determining a second occlusion region in the second moving object view image based on an obstacle in the second moving object view; determining a first temporary boundary of the obstacle in the first moving object view with respect to a first overlap region between the first moving object view and the second moving object view, based on the first occlusion region; determining a second temporary boundary of the obstacle in the second moving object view with respect to the first overlap region, based on the second occlusion region; and generating a top-view image of the moving object based on the first temporary boundary and the second temporary boundary. In this way, a top-view image that provides optimal visibility to a driver may be generated.

The determining of the first occlusion region and the determining of the second occlusion region may include detecting obstacle candidates disposed in the first view image by performing a semantic segmentation based on the first view image; and determining, among the detected obstacle candidates, a region corresponding to the obstacle of the first moving object view to be the first occlusion region.

The obstacle candidates may include a vehicle, a lane, a road, or a combination thereof, and the obstacle of the first view may be the vehicle.

The method may include generating a first partial top-view image and a second partial top-view image by warping the first moving object view image and the second moving object view image, respectively.

The determining of the first temporary boundary may include setting boundary candidates with respect to the first overlap region in the first partial top-view image; determining partial regions of the first overlap region by dividing the first overlap region into the boundary candidates; comparing a first corresponding occlusion region of the first occlusion region of the first partial top-view image with the partial regions; and determining one of the boundary candidates to be the first temporary boundary based on a result of the comparing.

The comparing of the first corresponding occlusion region with the partial regions may include comparing the first corresponding occlusion region with the partial regions based on at least one of an area occupied by the first corresponding occlusion region in each of the partial regions and a distance between the first corresponding occlusion region shown in each of the partial regions and a representative position with respect to the first occlusion region of the moving object.

The generating of the top-view image may include comparing a visibility of the first overlap region of the first view image identified by the first temporary boundary with a visibility of the first overlap region of the second view image identified by the second temporary boundary; and generating the top-view image by selectively using one of the first view image and the second view image with respect to the first overlap region, based on a final boundary determined according to a result of the comparing.

The method may include generating a third view image of a third moving object view; determining a third occlusion region generated in the third view image based on an obstacle in the third moving object view; determining a third temporary boundary with respect to a second overlap region between the first moving object view and the third moving object view, based on the first occlusion region; and determining a fourth temporary boundary with respect to the second overlap region, based on the third occlusion region.

The generating of the top-view image may include comparing a visibility of the second overlap region of the first view image identified by the third temporary boundary with a visibility of the second overlap region of the third view image identified by the fourth temporary boundary; and generating the top-view image by selectively using one of the first view image and the third view image with respect to the second overlap region, based on a final boundary determined according to a result of the comparing.

The first moving object view may be one of a front view, a rear view, a left view, and a right view of the moving object, and the second moving object view may be another one of the front view, the rear view, the left view, and the right view of the moving object, which is adjacent to the first moving object view.

In a general aspect, an electronic device includes one or more processors; and a memory configured to store instructions, wherein, in response to being executed by the one or more processors, the instructions cause the electronic device to: receive a first view image of a first moving object view and a second view image of a second moving object view; determine a first occlusion region in the first view image based on an obstacle in the first moving object view, and determining a second occlusion region in the second view image based on an obstacle in the second moving object view; determine a first temporary boundary of the obstacle in the first moving object view with respect to a first overlap region between the first moving object view and the second moving object view, based on the first occlusion region; determine a second temporary boundary of the obstacle in the second moving object view with respect to the first overlap region, based on the second occlusion region; and generate a top-view image of the moving object based on the first temporary boundary and the second temporary boundary.

In response to being executed by the one or more processors, the instructions may cause the electronic device to, for the determination of the first occlusion region and the second occlusion region: detect obstacle candidates disposed in the first view image by performing a semantic segmentation based on the first view image; and determine, among the detected obstacle candidates, a region corresponding to the obstacle of the first moving object view to be the first occlusion region.

In response to being executed by the one or more processors, the instructions may cause the electronic device to generate a first partial top-view image and a second partial top-view image by warping the first view image and the second view image, respectively.

In response to being executed by the one or more processors, the instructions may cause the electronic device to, for the determination of the first temporary boundary: set boundary candidates with respect to the first overlap region in the first partial top-view image; determine partial regions of the first overlap region by dividing the first overlap region into the boundary candidates; compare a first corresponding occlusion region of the first occlusion region of the first partial top-view image with the partial regions; and determine one of the boundary candidates to be the first temporary boundary based on a result of the comparison.

In response to being executed by the one or more processors, the instructions may cause the electronic device to, for the comparing of the first corresponding occlusion region with the partial regions, compare the first corresponding occlusion region with the partial regions based on at least one of an area occupied by the first corresponding occlusion region in each of the partial regions and a distance between the first corresponding occlusion region shown in each of the partial regions and a representative position with respect to the first occlusion region of the moving object.

In response to being executed by the one or more processors, the instructions may cause the electronic device to, for the generation of the top-view image: compare a visibility of the first overlap region of the first view image identified by the first temporary boundary with a visibility of the first overlap region of the second view image identified by the second temporary boundary; and generate the top-view image by selectively using one of the first view image and the second view image with respect to the first overlap region, based on a final boundary determined according to a result of the comparing.

The first view image of the first moving object view and the second view image of the second moving object view received by the electronic device may be generated by a first camera and a second camera, respectively, the first camera and the second camera being constituents of a moving object.

Other features and aspects will be apparent from the following detailed description, the drawings, and the claims.

Further aspects are described by the following clauses:
Clause 1: A processor-implemented method, comprising: generating a first view image of a first moving object view and generating a second view image of a second moving object view; determining a first occlusion region in the first moving object view image based on an obstacle in the first moving object view, and determining a second occlusion region in the second moving object view image based on an obstacle in the second moving object view; determining a first temporary boundary of the obstacle in the first moving object view with respect to a first overlap region between the first moving object view and the second moving object view, based on the first occlusion region; determining a second temporary boundary of the obstacle in the second moving object view with respect to the first overlap region, based on the second occlusion region; and generating a top-view image of the moving object based on the first temporary boundary and the second temporary boundary.
Clause 2: The method of clause 1, wherein the determining of the first occlusion region and the determining of the second occlusion region comprises: detecting obstacle candidates disposed in the first view image by performing a semantic segmentation based on the first view image; and determining, among the detected obstacle candidates, a region corresponding to the obstacle of the first moving object view to be the first occlusion region.
Clause 3: The method of clause 2, wherein the obstacle candidates comprise a vehicle, a lane, a road, or a combination thereof, and the obstacle of the first view is the vehicle.
Clause 4: The method of clause 1, further comprising: generating a first partial top-view image and a second partial top-view image by warping the first moving object view image and the second moving object view image, respectively.
Clause 5: The method of clause 4, wherein the determining of the first temporary boundary comprises: setting boundary candidates with respect to the first overlap region in the first partial top-view image; determining partial regions of the first overlap region by dividing the first overlap region into the boundary candidates; comparing a first corresponding occlusion region of the first occlusion region of the first partial top-view image with the partial regions; and determining one of the boundary candidates to be the first temporary boundary based on a result of the comparing.
Clause 6: The method of clause 5, wherein the comparing of the first corresponding occlusion region with the partial regions comprises comparing the first corresponding occlusion region with the partial regions based on at least one of an area occupied by the first corresponding occlusion region in each of the partial regions and a distance between the first corresponding occlusion region shown in each of the partial regions and a representative position with respect to the first occlusion region of the moving object.
Clause 7: The method of clause 1, wherein the generating of the top-view image comprises: comparing a visibility of the first overlap region of the first view image identified by the first temporary boundary with a visibility of the first overlap region of the second view image identified by the second temporary boundary; and generating the top-view image by selectively using one of the first view image and the second view image with respect to the first overlap region, based on a final boundary determined according to a result of the comparing.
Clause 8: The method of clause 1, further comprising: generating a third view image of a third moving object view; determining a third occlusion region generated in the third view image based on an obstacle in the third moving object view; determining a third temporary boundary with respect to a second overlap region between the first moving object view and the third moving object view, based on the first occlusion region; and determining a fourth temporary boundary with respect to the second overlap region, based on the third occlusion region.
Clause 9: The method of clause 8, wherein the generating of the top-view image comprises: comparing a visibility of the second overlap region of the first view image identified by the third temporary boundary with a visibility of the second overlap region of the third view image identified by the fourth temporary boundary; and generating the top-view image by selectively using one of the first view image and the third view image with respect to the second overlap region, based on a final boundary determined according to a result of the comparing.
Clause 10: The method of clause 1, wherein: the first moving object view is one of a front view, a rear view, a left view, and a right view of the moving object, and the second moving object view is another one of the front view, the rear view, the left view, and the right view of the moving object, which is adjacent to the first moving object view.
Clause 11: A non-transitory computer-readable storage medium storing instructions that, when executed by a processor, cause the processor to perform the method of clause 1.
Clause 12: An electronic device, comprising: one or more processors; and a memory configured to store instructions, wherein, in response to being executed by the one or more processors, the instructions cause the electronic device to: generate a first view image of a first moving object view and a second view image of a second moving object view; determine a first occlusion region in the first view image based on an obstacle in the first moving object view, and determining a second occlusion region in the second view image based on an obstacle in the second moving object view; determine a first temporary boundary of the obstacle in the first moving object view with respect to a first overlap region between the first moving object view and the second moving object view, based on the first occlusion region; determine a second temporary boundary of the obstacle in the second moving object view with respect to the first overlap region, based on the second occlusion region; and generate a top-view image of the moving object based on the first temporary boundary and the second temporary boundary.
Clause 13: The electronic device of clause 12, wherein, in response to being executed by the one or more processors, the instructions cause the electronic device to, for the determination of the first occlusion region and the second occlusion region: detect obstacle candidates disposed in the first view image by performing a semantic segmentation based on the first view image; and determine, among the detected obstacle candidates, a region corresponding to the obstacle of the first moving object view to be the first occlusion region.
Clause 14: The electronic device of clause 12, wherein, in response to being executed by the one or more processors, the instructions cause the electronic device to generate a first partial top-view image and a second partial top-view image by warping the first view image and the second view image, respectively.
Clause 15: The electronic device of clause 14, wherein, in response to being executed by the one or more processors, the instructions cause the electronic device to, for the determination of the first temporary boundary: set boundary candidates with respect to the first overlap region in the first partial top-view image; determine partial regions of the first overlap region by dividing the first overlap region into the boundary candidates; compare a first corresponding occlusion region of the first occlusion region of the first partial top-view image with the partial regions; and determine one of the boundary candidates to be the first temporary boundary based on a result of the comparison.
Clause 16: The electronic device of clause 15, wherein, in response to being executed by the one or more processors, the instructions cause the electronic device to, for the comparing of the first corresponding occlusion region with the partial regions, compare the first corresponding occlusion region with the partial regions based on at least one of an area occupied by the first corresponding occlusion region in each of the partial regions and a distance between the first corresponding occlusion region shown in each of the partial regions and a representative position with respect to the first occlusion region of the moving object.
Clause 17: The electronic device of clause 12, wherein, in response to being executed by the one or more processors, the instructions cause the electronic device to, for the generation of the top-view image: compare a visibility of the first overlap region of the first view image identified by the first temporary boundary with a visibility of the first overlap region of the second view image identified by the second temporary boundary; and generate the top-view image by selectively using one of the first view image and the second view image with respect to the first overlap region, based on a final boundary determined according to a result of the comparing.
Clause 18: A moving object, comprising: a first camera configured to generate a first view image of a first moving object view; a second camera configured to generate a second view image of a second moving object view; and one or more processors configured to: determine a first occlusion region in the first view image based on an obstacle in the first moving object view and a second occlusion region in the second view image based on an obstacle in the second moving object view, determine a first temporary boundary of the obstacle in the first moving object view with respect to a first overlap region between the first moving object view and the second moving object view, based on the first occlusion region, determine a second temporary boundary of the obstacle in the second moving object view with respect to the first overlap region, based on the second occlusion region, and generate a top-view image of the moving object based on the first temporary boundary and the second temporary boundary.
Clause 19: The moving object of clause 18, wherein the one or more processors is configured to: detect obstacle candidates disposed in the first view image by performing a semantic segmentation based on the first view image; and determine, among the detected obstacle candidates, a region corresponding to the obstacle of the first moving object view to be the first occlusion region.
Clause 20: The moving object of clause 18, wherein the one or more processors is configured to: generate a first partial top-view image and a second partial top-view image by warping the first view image and the second view image, respectively; set boundary candidates with respect to the first overlap region in the first partial top-view image; determine partial regions of the first overlap region by dividing the first overlap region into the boundary candidates; compare a first corresponding occlusion region of the first occlusion region of the first partial top-view image with the partial regions; and determine one of the boundary candidates to be the first temporary boundary based on a result of the comparison.

### BRIEF DESCRIPTION OF DRAWINGS

FIG. 1 illustrates an example of various view images of a moving object, in accordance with one or more embodiments.
FIG. 2 illustrates an example occlusion region generated in a view image by an obstacle, in accordance with one or more embodiments.
FIG. 3 illustrates an example of angles of boundaries between neighboring views, in accordance with one or more embodiments.
FIG. 4 illustrates an example of partial top-view images of view images and semantic segmentation results of the partial top-view images, in accordance with one or more embodiments.
FIG. 5A illustrates an example of boundary candidates of an overlap region, in accordance with one or more embodiments.
FIG. 5B illustrates an example process of determining a partial top-view image for an overlap region using boundaries, in accordance with one or more embodiments.
FIG. 6 illustrates an example process of synthesizing partial top-view images, in accordance with one or more embodiments.
FIG. 7 illustrates an example method of processing view images of a moving object, in accordance with one or more embodiments.
FIG. 8 illustrates an example configuration of an electronic device, in accordance with one or more embodiments.
FIG. 9 illustrates an example configuration of a moving object, in accordance with one or more embodiments.

Throughout the drawings and the detailed description, unless otherwise described or provided, the same drawing reference numerals may be understood to refer to the same or like elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, and modifications of the methods, apparatuses, and/or systems described herein will be apparent after an understanding of the disclosure of this application. For example, the sequences within and/or of operations described herein are merely examples, and are not limited to those set forth herein, but may be changed as will be apparent after an understanding of the disclosure of this application, except for sequences within and/or of operations necessarily occurring in a certain order. As another example, the sequences of and/or within operations may be performed in parallel, except for at least a portion of sequences of and/or within operations necessarily occurring in an order, e.g., a certain order. Also, descriptions of features that are known after an understanding of the disclosure of this application may be omitted for increased clarity and conciseness.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Throughout the specification, when a component or element is described as "on," "connected to," "coupled to," or "joined to" another component, element, or layer, it may be directly (e.g., in contact with the other component, element, or layer) "on," "connected to," "coupled to," or "joined to" the other component element, or layer, or there may reasonably be one or more other components elements, or layers intervening therebetween. When a component or element is described as "directly on", "directly connected to," "directly coupled to," or "directly joined to" another component element, or layer, there can be no other components, elements, or layers intervening therebetween. Likewise, expressions, for example, "between" and "immediately between" and "adjacent to" and "immediately adjacent to" may also be construed as described in the foregoing.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

The terminology used herein is for describing various examples only and is not to be used to limit the disclosure. The articles "a," "an," and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof, or the alternate presence of an alternative stated features, numbers, operations, members, elements, and/or combinations thereof. Additionally, while one embodiment may set forth such terms "comprise" or "comprises," "include" or "includes," and "have" or "has" specify the presence of stated features, numbers, operations, members, elements, and/or combinations thereof, other embodiments may exist where one or more of the stated features, numbers, operations, members, elements, and/or combinations thereof are not present.

As used herein, the term "and/or" includes any one and any combination of any two or more of the associated listed items. The phrases "at least one of A, B, and C", "at least one of A, B, or C", and the like are intended to have disjunctive meanings, and these phrases "at least one of A, B, and C", "at least one of A, B, or C", and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application. The use of the term "may" herein with respect to an example or embodiment (e.g., as to what an example or embodiment may include or implement) means that at least one example or embodiment exists where such a feature is included or implemented, while all examples are not limited thereto. The use of the terms "example" or "embodiment" herein have a same meaning (e.g., the phrasing "in one example" has a same meaning as "in one embodiment", and "one or more examples" has a same meaning as "in one or more embodiments").

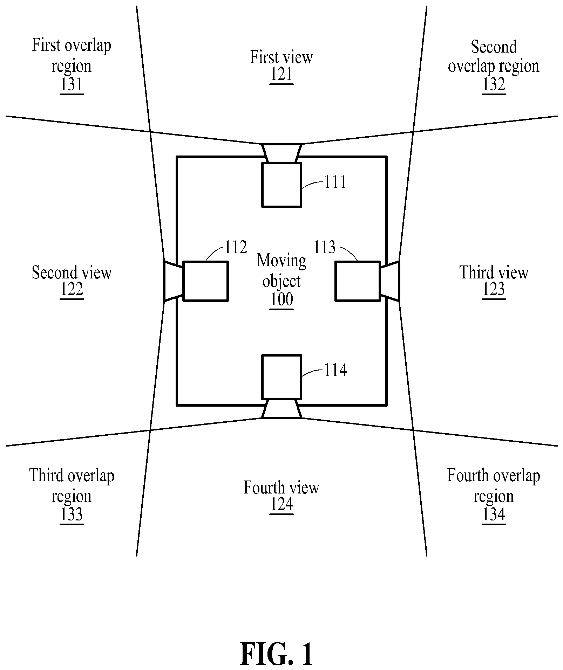

FIG. 1 illustrates an example of various view images of a moving object.

Referring to FIG. 1, first to fourth cameras 111, 112, 113, and 114 may be installed on a moving object 100. The moving object 100 may be a movable apparatus controlled by a driver on board the moving object 100 or a movable apparatus controlled by a driver outside of the moving object 100. For example, the moving object 100 may be, as only examples, a vehicle, a robot, a drone, and the like.

The first to fourth cameras 111, 112, 113, and 114 may be disposed to capture views in different directions, respectively. The first camera 111 may capture a first view image of a first view 121 viewed from the moving object 100, the second camera 112 may capture a second view image of a second view 122 viewed from the moving object 100, the third camera 113 may capture a third view image of a third view 123 viewed from the moving object 100, and the fourth camera 114 may capture a fourth view image of a fourth view 124 viewed from the moving object 100. The first to fourth views 121, 122, 123, and 124 may correspond to an angle of view or a capturing range of the first to fourth cameras 111, 112, 113, and 114, respectively.

In an example, the first to fourth cameras 111, 112, 113, and 114 may be wide-angle cameras. In an example, the first to fourth cameras 111, 112, 113, and 114 may have an angle of view of 90 degrees (°) or more. In an example, the angle of view of the first to fourth cameras 111, 112, 113, and 114 may range from 180° to 220°. In an example, the first to fourth cameras 111, 112, 113, and 114 may be fisheye cameras.

Due to the wide angle of view of the first to fourth cameras 111, 112, 113, and 114, first to fourth overlap regions 131, 132, 133, and 134 may be formed between neighboring views of the first to fourth views 121, 122, 123, and 124. For example, the first overlap region 131 between the first view 121 and the second view 122, the second overlap region 132 between the first view 121 and the third view 123, the third overlap region 133 between the second view 122 and the fourth view 124, and the fourth overlap region 134 between the third view 123 and the fourth view 124 may be formed.

The view images of the first to fourth views 121, 122, 123, and 124 may be used to generate a top-view image. For example, partial top-view images may be generated by image-warping the view images of the first to fourth views 121, 122, 123, and 124 or the top-view image may be generated by synthesizing (e.g., merging) the partial top-view images. The partial top-view images may refer to images that may form a portion of the top-view image. The top-view image may correspond to a bird's-eye view image.

When the top-view image is generated, a plurality of view images available in each of the first to fourth overlap regions 131, 132, 133, and 134 may be generated. For example, the first view image of the first view 121 and the second view image of the second view 122 may be used in the first overlap region 131. Depending on the occlusion state of each view image, at least one of the plurality of available view images may be selectively used. As the view images are selectively used by considering the occlusion state, a blind spot may be minimized and visibility of a driver may be secured.

Although an example in which four cameras (i.e., first to fourth cameras 111, 112, 113, and 114) are used is illustrated in FIG. 1, examples are not limited thereto. Various numbers of cameras, such as two cameras, three cameras, or five or more cameras, may be used to generate the top-view image, and an image synthesis based on the occlusion state may be used to generate the top-view image.

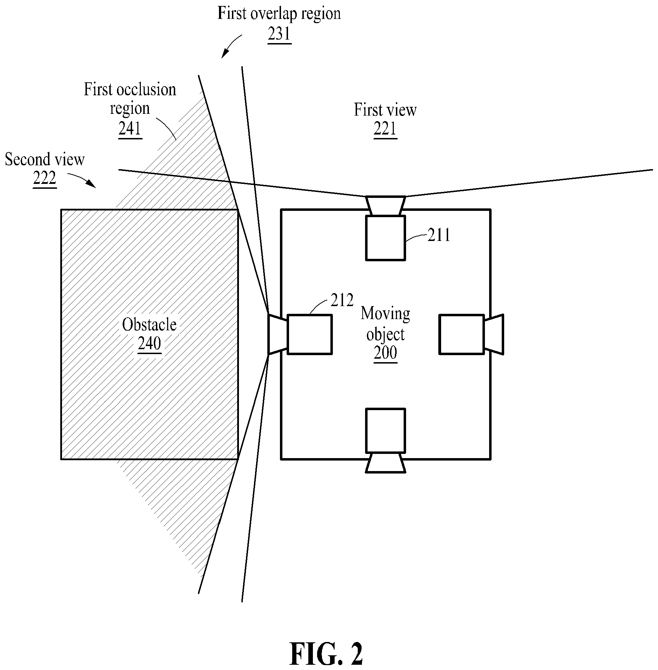

FIG. 2 illustrates an example of an occlusion region generated in a view image based on the presence of an obstacle.

Referring to FIG. 2, a first occlusion region 241 may be generated in a second view image of a second view 222 of a second camera 212 based on the presence of an obstacle 240. In an example, when a moving object 200 is a vehicle, the obstacle 240 may correspond to, as an example, a neighboring vehicle disposed adjacent to the moving object 200. In an example, when the moving object 200 is parked, the first occlusion region 241 of the second view 222 may be generated based on the neighboring vehicle that is parked adjacent to the moving object 200. In a first view image of a first view 221 of a first camera 211, the first occlusion region 241 may not exist or may appear less visibly than the second view image. In this example, using the first view image of the first view 221 may be advantageous in securing visibility rather than using the second view image of the second view 222 to generate a top-view image.

When a corresponding region of a first overlap region 231 of the top-view image of the moving object 200 is generated, the first view image may be used instead of the second view image, and a blind spot may be minimized. In an example, the first view 221 may be one of a front view, a rear view, a left view, and a right view of the moving object 200, and the second view 222 may be another one of the front view, the rear view, the left view, and the right view of the moving object 200, which is adjacent to the first view 221. The obstacle 240 may be one or more obstacles 240 that may exist in other views in addition to the second view 222. A view image with relatively less occlusion may be used to generate the top-view image with respect to an overlap region of other views.

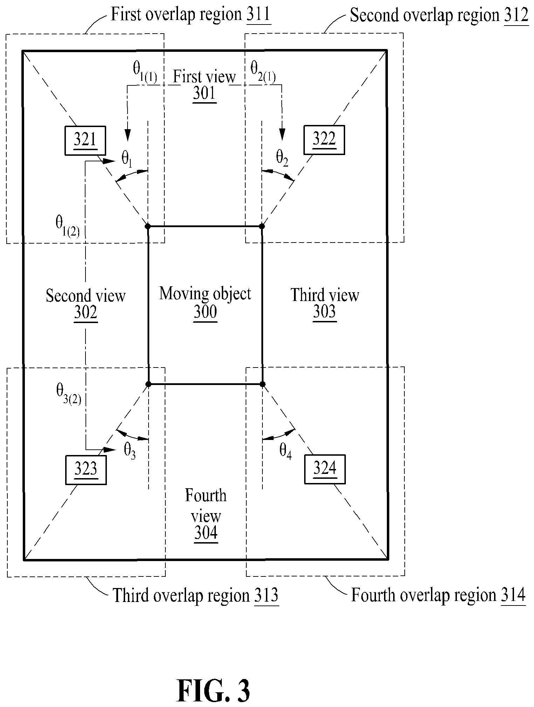

FIG. 3 illustrates an example of angles of boundaries between neighboring views.

Referring to FIG. 3, boundaries 321, 322, 323, and 324 may be defined for respective first to fourth overlap regions 311, 312, 313, and 314. The boundaries 321, 322, 323, and 324 may be determined based on an occlusion region with respect to each of the first to fourth overlap regions 311, 312, 313, and 314. Visibility of each of the first to fourth overlap regions 311, 312, 313, and 314 of view images of first to fourth views 301, 302, 303, and 304 may be identified by the boundaries 321, 322, 232, and 324. The boundaries 321, 322, 323, and 324 may be specified by angles θ₁ to θ₄.

The boundaries 321, 322, 323, and 324 may be selected from temporary boundaries. The temporary boundaries of each of the view images of the first to fourth views 301, 323, 303, and 304 may be determined based on an occlusion region of each of the view images of the first to fourth views 301, 302, 303, and 304. The temporary boundaries may be specified by angles θ₁₍ₓ₎ to θ₄₍ₓ₎. x may represent the first to fourth views 301, 302, 303, and 304. The boundaries 321, 322, 323, and 324 of each of the first to fourth overlap regions 311, 312, 131, and 314 may be selected from the temporary boundaries of each of the first to fourth overlap regions 311, 312, 313, and 314. Two temporary boundaries that compete with each other may be present in each of the first to fourth overlap regions 311, 312, 313, and 314, and one of the two temporary boundaries may be selected as the boundaries 321, 322, 323, and 324 of each of the first to fourth overlap regions 311, 312, 313, and 314. A selected boundary may be referred to as a final boundary.

In an example, a temporary boundary of the first overlap region 311 specified by angle θ₁₍₁₎ and a temporary boundary of the second overlap region 312 specified by angle θ₂₍₁₎ with respect to a first view image of the first view 301 may be determined, and a temporary boundary of the first overlap region 311 specified by angle θ₁₍₂₎ and a temporary boundary of third overlap region 313 specified by angle θ₃₍₂₎ with respect to a second view image of the second view 302 may be determined. One of the temporary boundary of the first overlap region 311 specified by the angle θ₁₍₁₎ and the temporary boundary of the first overlap region 311 specified by the angle θ₁₍₂₎ may be determined to be the boundary 321 of the first overlap region 311. The boundary 321 may be referred to as a final boundary of the first overlap region 311.

The angles θ₁₍ₓ₎ to θ₄₍ₓ₎ may represent visibility. The greater the angles θ₁₍ₓ₎ to θ₄₍ₓ₎, the greater the visibility. For example, with respect to the first overlap region 311, in the example in which an angle (e.g., the angle θ₁₍₁₎) of a first temporary boundary is greater than an angle (e.g., the angle θ₁₍₂₎) of a second temporary boundary, this may indicate that the first view image of the angle θ₁₍₁₎ has higher visibility than the second view image of the angle θ₁₍₂₎. In this example, instead of the second view image, the first view image may be used to generate a corresponding region of the first overlap region 311 of a top-view image. As described above, the view images may be selected based on the comparison between the temporary boundaries based on the angles θ₁₍ₓ₎ to θ₄₍ₓ₎. However, since this is according to the definition of the angles θ₁₍ₓ₎ to θ₄₍ₓ₎, the influence on the visibility of the angles θ₁₍ₓ₎ to θ₄₍ₓ₎ and the selection algorithm may change when the definition of the angles θ₁₍ₓ₎ to θ₄₍ₓ₎ changes.

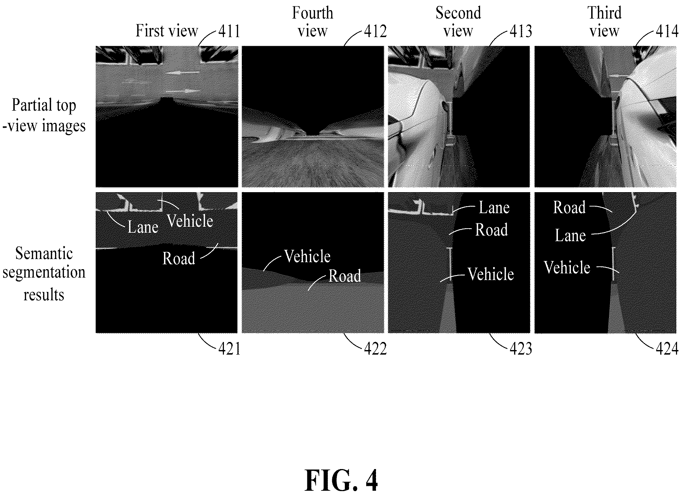

FIG. 4 illustrates an example of partial top-view images of the captured view images and semantic segmentation results of the partial top-view images.

Referring to FIG. 4, partial top-view images 411, 412, 413, and 414 may be generated based on the initially captured view images of a first view (e.g., the front view), a second view (e.g., the left view), a third view (e.g., the right view), and a fourth view (e.g., the rear view). The partial top-view images 411, 412, 413, and 414may be generated by warping the initially captured view images of the first view (e.g., the front view), the second view (e.g., the left view), the third view (e.g., the right view), and the fourth view (e.g., the rear view), respectively. For example, mapping information of the view images for partial regions of a top-view image may be predetermined, and the partial top-view images 411, 412, 413, and 414 may be generated by warping the initially captured view images according to the mapping information. The final top-view image may be generated by synthesizing the partial top-view images 411, 412, 413, and 414. The view images of the first to fourth views may correspond to an example of various view images, and examples are not limited thereto.

FIG. 4 illustrates an example of generating the respective partial top-view images 411, 412, 413, and 414 of the view images before the final top-view image is generated. However, the examples are not limited thereto. The final top-view image may be directly generated based on the initially captured view images without performing a conversion on the partial top-view images 411, 412, 413, and 414 of the initially captured view images. To determine boundaries of overlap regions of the initially captured view images, occlusion regions generated in the initially captured view images by obstacles of the first to fourth views may be determined.

The obstacles may be detected based on semantic segmentation. For example, the semantic segmentation may be performed using, as an example, a neural network. However, the examples are not limited thereto. Obstacle candidates shown in the view images may be detected by performing the semantic segmentation based on the view images. Among the obstacle candidates, a region corresponding to the obstacles of the first to fourth views may be determined to be the occlusion regions. For example, a first occlusion region generated in a first view image by an obstacle of a first view and a second occlusion region generated in a second view image by an obstacle of a second view may be determined. In an example, the obstacle candidates shown in the first view image may be detected by performing the semantic segmentation based on the first view image, and among the obstacle candidates, a region corresponding to the obstacle of the first view may be determined to be the first occlusion region.

In the example of FIG. 4, respective semantic segmentation results 421, 422, 423, and 424 may be generated based on the semantic segmentation for the partial top-view images 411, 412, 413, and 414. The semantic segmentation results 421, 422, 423, and 424 may include the obstacle candidates. As non-limited examples, the obstacle candidates may include a vehicle, a lane, a road, or a combination thereof. An obstacle may be detected from the obstacle candidates. For example, when a moving object is a vehicle, the obstacle in each view may be the vehicle. When the moving object is a vehicle, a neighboring vehicle may be the greatest obstacle to visibility. The obstacles of each view may be the same or different from each other.

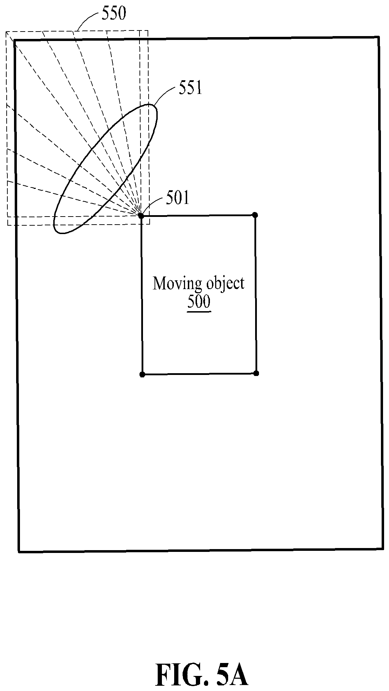

FIG. 5A illustrates an example of boundary candidates of an overlap region.

Referring to FIG. 5A, a boundary of an overlap region 550 may be determined using boundary candidates 551. For example, temporary boundaries of the overlap region 550 may be determined using the boundary candidates 551, and the boundary of the overlap region 550 may be selected from the temporary boundaries. The boundary candidates 551 may include lines passing a representative position 501 of a moving object 500 in the overlap region 550. For example, the representative position 501 may exist between camera positions (e.g., an intermediate point). For example, when the moving object 500 is expressed in a quadrangular shape, the representative position 501 may correspond to an edge of the quadrangular shape.

The boundary candidates 551 may evenly divide the maximum angle formed by boundary candidates (e.g., the first boundary candidate and the last boundary candidate) at the end of the boundary candidates 551. The overlap region 550 may be divided by the boundary candidates 551. A region divided by the boundary candidates 551 may be referred to as a partial region of the overlap region 550. For example, when the number of boundary candidates 551 is k + 1, k partial regions may be formed.

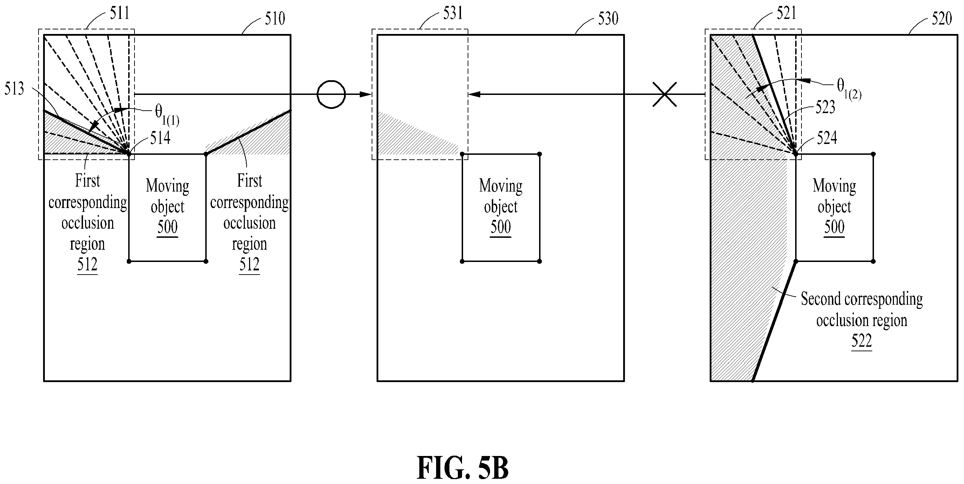

FIG. 5B illustrates an example process of determining a partial top-view image with respect to an overlap region using boundaries.

Referring to FIG. 5B, a first corresponding occlusion region 512 of a first partial top-view image 510 may be determined based on a first occlusion region generated in a first view image based on an obstacle in a first view. A first temporary boundary 513 of the obstacle of the first view with respect to a first overlap region 511 between the first view and a second view may be determined based on the first corresponding occlusion region 512. In an example, boundary candidates with respect to the first overlap region 511 may be set in the first partial top-view image 510, partial regions of the first overlap region 511 may be determined by dividing the first overlap region 511 into the boundary candidates, the first corresponding occlusion region 512 of the first partial top-view image 510 may be compared with the partial regions, and one of the boundary candidates may be determined to be the first temporary boundary 513 based on the comparison result.

The first corresponding occlusion region 512 may be compared with the partial regions based on at least one of an area occupied by the first corresponding occlusion region 512 in each of the partial regions and a distance between the first corresponding occlusion region 512 shown in each of the partial regions and a representative position 514 with respect to the first overlap region 511 of the moving object 500. For example, when the area occupied by the first corresponding occlusion region 512 is greater than or equal to a predetermined percentage (e.g., 80%) and the distance between the first corresponding occlusion region 512 shown in each of the partial regions and a representative position 514 is less than or equal to a predetermined distance (e.g., 20 centimeters (cm)), a representative boundary candidate of the boundary candidates covering corresponding partial regions may be determined to be the first temporary boundary 513. Among the boundary candidates, one with the least angle θ₁₍₁₎ may be determined to be the representative boundary candidate.

Similar to the first determined temporary boundary 513, a second temporary boundary 523 of a second partial top-view image 520 may be determined. More specifically, a second corresponding occlusion region 522 of the second partial top-view image 520 may be determined based on a second occlusion region generated in a second view image by an obstacle of a second view. The second temporary boundary 523 of the obstacle of the second view with respect to the first overlap region 511 between the first view and the second view may be determined based on the second corresponding occlusion region 522. For example, boundary candidates with respect to a second overlap region 521 may be set in the second partial top-view image 520, partial regions of the second overlap region 521 may be determined by dividing the second overlap region 521 into the boundary candidates, the second corresponding occlusion region 522 of the second partial top-view image 520 may be compared with the partial regions, and one of the boundary candidates may be determined to be the second temporary boundary 523 based on the comparison result.

The second corresponding occlusion region 522 may be compared with the partial regions based on at least one of an area occupied by the second corresponding occlusion region 522 in each of the partial regions and a distance between the second corresponding occlusion region 522 shown in each of the partial regions and a representative position 524 with respect to the second overlap region 521 of the moving object 500. For example, when the area occupied by the second corresponding occlusion region 522 is greater than or equal to a predetermined percentage (e.g., 80%) and the distance between the second corresponding occlusion region 522 shown in each of the partial regions and a representative position 524 is less than or equal to a predetermined distance (e.g., 20 cm), a representative boundary candidate of the boundary candidates covering corresponding partial regions may be determined to be the second temporary boundary 523. Among the boundary candidates, one with the least angle θ₁₍₂₎ may be determined to be the representative boundary candidate.

A first overlap region 531 of a top-view image 530 of the moving object 500 may be formed based on the first temporary boundary 513 and the second temporary boundary 523. Visibility of the first overlap region 511 of the first partial top-view image 510 identified by the first temporary boundary 513 may be compared with visibility of the first overlap region 521 of the second partial top-view image 520 identified by the second temporary boundary 523. The first overlap region 531 of the top-view image 530 may be formed by selectively using one of the first partial top-view image 510 and the second partial top-view image 520 with respect to the first overlap region 531 of the top-view image 530, based on a final boundary determined by the comparison result. One of the first partial top-view image 510 and the second partial top-view image 520, which has higher visibility with respect to the first overlap region 531, may be selected. One of the first temporary boundary 513 and the second temporary boundary 523 may be selected as a boundary of the first overlap region 511 based on the visibility with respect to the first overlap region 531.

Other overlap regions of the top-view image 530 may be formed through a process similar to the selective use process of the first partial top-view image 510 and the second partial top-view image 520 with respect to the first overlap region 531. For example, a third occlusion region generated in a third view image based on an obstacle of a third view may be determined when the third view image of the third view viewed from the moving object 500 is received, a third temporary boundary with respect to the second overlap region 521 between the first view and the third view may be determined based on a first occlusion region, and a fourth temporary boundary with respect to the second overlap region 521 may be determined based on the third occlusion region. Visibility of the second overlap region 521 of the first view image identified by the third temporary boundary may be compared with visibility of the second overlap region 521 of the third view image identified by the fourth temporary boundary, and the second overlap region 521 of the top-view image 530 may be formed by selectively using one of the first view image and the third view image with respect to the second overlap region 521, based on a final boundary determined according to the comparison result.

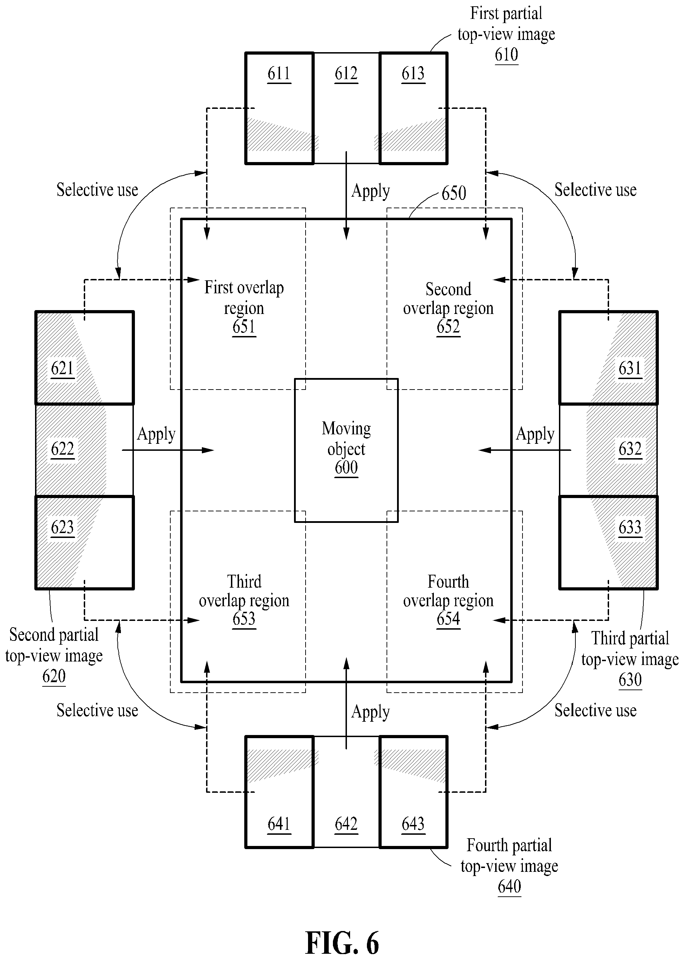

FIG. 6 illustrates an example process of synthesizing partial top-view images, in accordance with one or more embodiments.

Referring to FIG. 6, a top-view image 650 of a moving object 600 may be generated by synthesizing (e.g., merging) first to fourth partial top-view images 610, 620, 630, and 640. A first occlusion region generated in the first partial top-view image 610 based on an obstacle of a first view, a second occlusion region generated in the second partial top-view image 620 based on an obstacle of a second view, a third occlusion region generated in the third partial top-view image 630 based on an obstacle of a third view, and a fourth occlusion region generated in the fourth partial top-view image 640 based on an obstacle of a fourth view may be determined. The obstacles of each view may be the same or different from each other.

A first temporary boundary of the obstacle of the first view with respect to a first overlap region 651 of the top-view image 650 may be determined based on the first occlusion region, and a second temporary boundary of the obstacle of the second view with respect to the first overlap region 651 may be determined based on the second occlusion region. The first overlap region 651 of the top-view image 650 may be formed by selectively using a partial region 611 of the first partial top-view image 610 with respect to the first overlap region 651, and a partial region 621 of the second partial top-view image 620 with respect to the first overlap region 651, based on the first temporary boundary and the second temporary boundary.

A third temporary boundary of the obstacle of the first view with respect to a second overlap region 652 of the top-view image 650 may be determined based on the first occlusion region, and a fourth temporary boundary of the obstacle of the third view with respect to the second overlap region 652 may be determined based on the third occlusion region. The second overlap region 652 may be formed by selectively using a partial region 613 of the first partial top-view image 610 with respect to the second overlap region 652 and a partial region 631 of the third partial top-view image 630 with respect to the second overlap region 652, based on the third temporary boundary and the fourth temporary boundary.

A third overlap region 653 of the top-view image 650 may be formed by selectively using a partial region 623 of the second partial top-view image 620 with respect to the third overlap region 653 and a partial region 641 of the fourth partial top-view image 640 with respect to the third overlap region 653, and a fourth overlap region 654 of the top-view image 650 may be formed by selectively using a partial region 633 of the third partial top-view image 630 with respect to the fourth overlap region 654 and a partial region 643 of the fourth partial top-view image 640 with respect to the fourth overlap region 654. Remaining partial images 612, 622, 632, and 642 of the first to fourth partial images 610 to 640 may be applied to remaining regions of the top-view image 650. The remaining regions may be referred to as non-overlap regions, dedicated regions, or exclusive regions to distinguish the remaining regions from the first to fourth overlap regions 651 to 654.

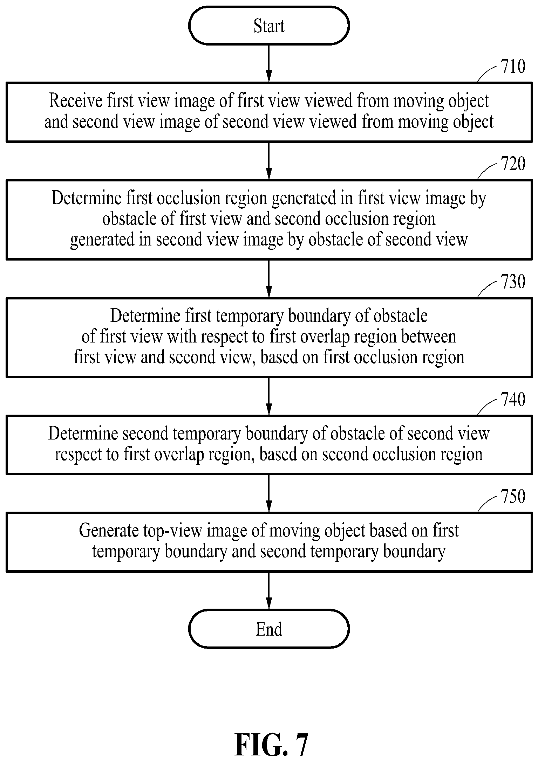

FIG. 7 illustrates an example method of processing view images of a moving object, in accordance with one or more embodiments. The operations in FIG. 7 may be performed in the sequence and manner as shown. However, the order of some operations may be changed, or some of the operations may be omitted, without departing from the scope. Additionally, some operations illustrated in FIG. 7 may be performed in parallel or simultaneously. In an example, the descriptions of FIGS. 1-6 may also be applicable to FIG. 7 and are incorporated herein by reference. Thus, the above description may not be repeated here for brevity purposes.

Referring to FIG. 7, in operation 710, an electronic device may receive a first view image of a first view that is viewed from a moving object and a second view image of a second view that is viewed from the moving object. In operation 720, the electronic device may determine a first occlusion region generated in the first view image based on an obstacle in the first view and a second occlusion region generated in the second view image based on an obstacle in the second view. In operation 730, the electronic device may determine a first temporary boundary of the obstacle of the first view with respect to a first overlap region between the first view and the second view, based on the first occlusion region. In operation 740, the electronic device may determine a second temporary boundary of the obstacle of the second view with respect to the first overlap region, based on the second occlusion region. In operation 750, the electronic device may generate a top-view image of the moving object based on the first temporary boundary and the second temporary boundary.

Operation 720 may include detecting obstacle candidates shown in the first view image by performing semantic segmentation based on the first view image and determining, among the obstacle candidates, a region corresponding to the obstacle of the first view to be the first occlusion region.

The obstacle candidates may include, as only examples, a vehicle, a lane, a road, or a combination thereof, and the obstacle of the first view may be the vehicle.

The electronic device may generate a first partial top-view image and a second partial top-view image by warping the first view image and the second view image, respectively.

Operation 730 may include setting boundary candidates with respect to the first overlap region in the first partial top-view image, determining partial regions of the first overlap region by dividing the first overlap region into the boundary candidates, comparing a first corresponding occlusion region of the first occlusion region of the first partial top-view image with the partial regions, and determining one of the boundary candidates to be the first temporary boundary based on a final boundary determined by the comparison result.

The comparing of the first corresponding occlusion region with the partial regions may include comparing the first corresponding occlusion region with the partial regions based on at least one of an area occupied by the first corresponding occlusion region in each of the partial regions and a distance between the first corresponding occlusion region shown in each of the partial regions and a representative position with respect to the first occlusion region of the moving object.

Operation 750 may include comparing a visibility of the first overlap region of the first view image identified by the first temporary boundary with a visibility of the first overlap region of the second view image identified by the second temporary boundary and generating the top-view image by selectively using one of the first view image and the second view image with respect to the first overlap region, based on a final boundary determined according to the comparison result.

The electronic device may receive a third view image of a third view viewed from the moving object, determine a third occlusion region generated in the third view image based on an obstacle of the third view, determine a third temporary boundary with respect to a second overlap region between the first view and the third view, based on the first occlusion region, and determine a fourth temporary boundary with respect to the second overlap region, based on the third occlusion region.

Operation 750 may include comparing a visibility of the second overlap region of the first view image identified by the third temporary boundary with a visibility of the second overlap region of the third view image identified by the fourth temporary boundary and generating the top-view image by selectively using one of the first view image and the third view image with respect to the second overlap region, based on a final boundary determined according to the comparison result.

The first view may be one of a front view, a rear view, a left view, and a right view of the moving object, and the second view may be another one of the front view, the rear view, the left view, and the right view of the moving object, which is adjacent to the first view.

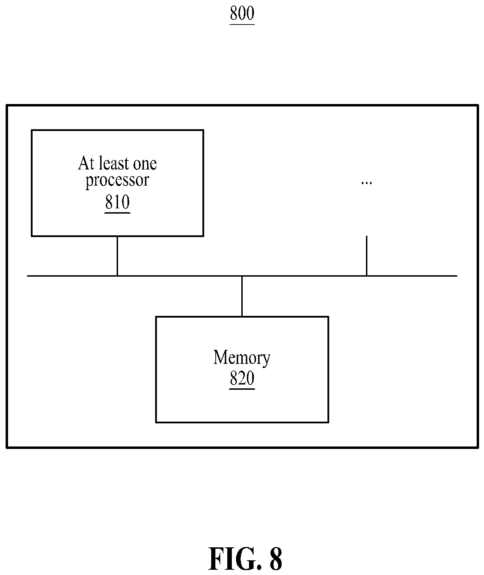

FIG. 8 illustrates an example of a configuration of an electronic device. Referring to FIG. 8, an electronic device 800 may include at least one processor 810 and a memory 820. Although not shown in FIG. 8, the electronic device 800 may further include other devices such as a storage device, an input device, an output device, and a network device, as examples.

The memory 820 may be connected to the at least one processor 810 and may store instructions executable by the at least one processor 810, data to be computed by the at least one processor 810, data processed by the at least one processor 810, or a combination thereof. The memory 820 may include a non-transitory computer-readable storage medium, for example, highspeed random-access memory (RAM) and/or a non-volatile computer-readable storage medium (for example, a disk storage device, a flash memory device, or other non-volatile solid-state memory devices).

The at least one processor 810 may execute instructions to perform the operations described with reference to FIGS. 1 to 7 and 9. For example, when executed by the at least one processor 810, the instructions cause the electronic device 800 to receive a first view image of a first view viewed from a moving object and a second view image of a second view viewed from the moving object, determine a first occlusion region generated in the first view image by an obstacle of the first view and a second occlusion region generated in the second view image by an obstacle of the second view, determine a first temporary boundary of the obstacle of the first view with respect to a first overlap region between the first view and the second view, based on the first occlusion region, determine a second temporary boundary of the obstacle of the second view with respect to the first overlap region, based on the second occlusion region, and generate a top-view image of the moving object based on the first temporary boundary and the second temporary boundary.

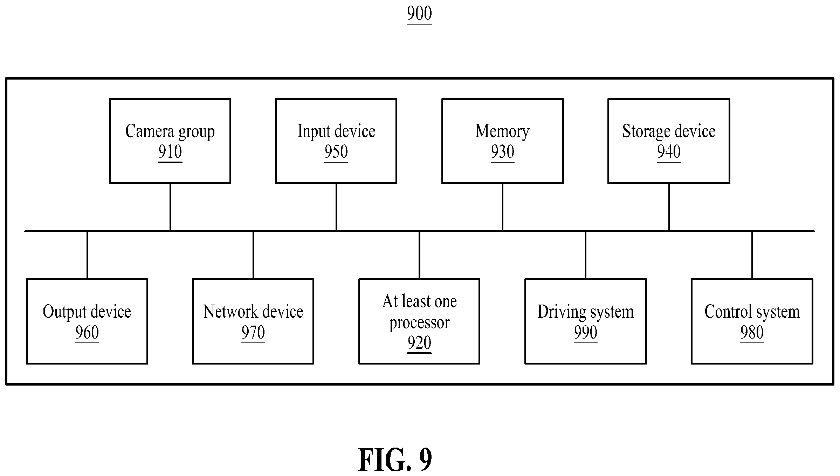

FIG. 9 illustrates an example of a configuration of a moving object, for example, a vehicle, in accordance with one or more embodiments.

Referring to FIG. 9, a moving object 900 may include a camera group 910 and at least one processor 920. The moving object 900 may further include other devices, such as a memory 930, a storage device 940, an input device 950, an output device 960, a network device 970, a control system 980, and a driving system 990, as examples. For example, the moving object 900 may include the electronic device 800 of FIG. 8.

The camera group 910 may include a plurality of cameras that generate view images of various views viewed from the moving object 900. For example, the camera group 910 may include a first camera that generates a first view image of a first view that is viewed from the moving object 900, a second camera that generates a second view image of a second view that is viewed from the moving object 900, a third camera that generates a third view image of a third view that is viewed from the moving object 900, and a fourth camera that generates a fourth view image of a fourth view that is viewed from the moving object 900. However, examples are not limited thereto, and various numbers of cameras, such as two cameras, three cameras, or five or more cameras, may be used to generate a top-view image, and an image synthesis based on an occlusion state may be used to generate the top-view image.

The at least one processor 920 may execute instructions to perform the operations described above with reference to FIGS. 1 to 8. For example, the at least one processor 920 may determine a first occlusion region generated in the first view image based on an obstacle of the first view and a second occlusion region generated in the second view image based on an obstacle of the second view, determine a first temporary boundary of the obstacle of the first view with respect to a first overlap region between the first view and the second view, based on the first occlusion region, determine a second temporary boundary of the obstacle of the second view with respect to the first overlap region, based on the second occlusion region, and generate the top-view image of the moving object 900 based on the first temporary boundary and the second temporary boundary.

The output device may output the top-view image. For example, the output device may include a display device that displays the top-view image. In an example, the moving object 900 may be a vehicle with the display device, and the top-view image may be provided through the display device of the vehicle. A driver may control the vehicle by referring to the top-view image displayed on the display device. When the moving object 900 is a robot or a drone, the top-view image itself or information used to generate the top-view image may be provided to a separate control device that is disposed separately from the moving object 900 through the network device, and the control device may provide the top-view image to the driver through the display device of the control device.

The control system may control the moving object 900 and/or the driving system based on the top-view image. For example, the control system may control the speed and/or steering of the moving object 900 according to the object recognition result based on the top-view image and/or the operation of the driver.

The cameras 111, 112, 113, 114, 211, and 212, processor 810, memory 820, camera group 910, processor 920 memory 930, storage device 940, input device 950, output device 960, network device 970, control system 980, driving system 990, and other processors, memories, and communication interfaces described herein, including corresponding and other descriptions herein with respect to FIGS. 1-9, are implemented by, or representative of, hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both, and thus while some references may be made to a singular processor or computer, such references also are intended to refer to multiple processors or computers. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in, and discussed with respect to, FIGS. 1-9 that perform the operations described in this application are performed by computing hardware, for example, by one or more processors or computers, implemented as described above implementing instructions (e.g., computer or processor/processing device readable instructions) or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations. References to a processor, or one or more processors, as a non-limiting example, configured to perform two or more operations refers to a processor or two or more processors being configured to collectively perform all of the two or more operations, as well as a configuration with the two or more processors respectively performing any corresponding one of the two or more operations (e.g., with a respective one or more processors being configured to perform each of the two or more operations, or any respective combination of one or more processors being configured to perform any respective combination of the two or more operations).

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, not a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and/or any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components.

Therefore, in addition to the above and all drawing disclosures, the scope of the disclosure is also inclusive of the claims and all variations within the scope of the claims which are to be construed as being included in the disclosure.

## Claims

1. A processor-implemented method, comprising:
receiving a first view image of a first moving object view and receiving a second view image of a second moving object view;
determining a first occlusion region in the first moving object view image based on an obstacle in the first moving object view, and determining a second occlusion region in the second moving object view image based on an obstacle in the second moving object view;
determining a first temporary boundary of the obstacle in the first moving object view with respect to a first overlap region between the first moving object view and the second moving object view, based on the first occlusion region;
determining a second temporary boundary of the obstacle in the second moving object view with respect to the first overlap region, based on the second occlusion region; and
generating a top-view image of the moving object based on the first temporary boundary and the second temporary boundary.

2. The method of claim 1, wherein the determining of the first occlusion region and the determining of the second occlusion region comprises:
detecting obstacle candidates disposed in the first view image by performing a semantic segmentation based on the first view image; and
determining, among the detected obstacle candidates, a region corresponding to the obstacle of the first moving object view to be the first occlusion region;
wherein the obstacle candidates preferably comprise a vehicle, a lane, a road, or a combination thereof, and the obstacle of the first view is preferably the vehicle.

3. The method of claim 1 or 2, further comprising:
generating a first partial top-view image and a second partial top-view image by warping the first moving object view image and the second moving object view image, respectively.

4. The method of claim 3 wherein the determining of the first temporary boundary comprises:
setting boundary candidates with respect to the first overlap region in the first partial top-view image;
determining partial regions of the first overlap region by dividing the first overlap region into the boundary candidates;
comparing a first corresponding occlusion region of the first occlusion region of the first partial top-view image with the partial regions; and
determining one of the boundary candidates to be the first temporary boundary based on a result of the comparing,
wherein the comparing of the first corresponding occlusion region with the partial regions preferably comprises comparing the first corresponding occlusion region with the partial regions based on at least one of an area occupied by the first corresponding occlusion region in each of the partial regions and a distance between the first corresponding occlusion region shown in each of the partial regions and a representative position with respect to the first occlusion region of the moving object.

5. The method of any of the previous claims, wherein the generating of the top-view image comprises:
comparing a visibility of the first overlap region of the first view image identified by the first temporary boundary with a visibility of the first overlap region of the second view image identified by the second temporary boundary; and
generating the top-view image by selectively using one of the first view image and the second view image with respect to the first overlap region, based on a final boundary determined according to a result of the comparing.

6. The method of any of the previous claims, further comprising:
generating a third view image of a third moving object view;
determining a third occlusion region generated in the third view image based on an obstacle in the third moving object view;
determining a third temporary boundary with respect to a second overlap region between the first moving object view and the third moving object view, based on the first occlusion region; and
determining a fourth temporary boundary with respect to the second overlap region, based on the third occlusion region.

7. The method of claim 6, wherein the generating of the top-view image comprises:
comparing a visibility of the second overlap region of the first view image identified by the third temporary boundary with a visibility of the second overlap region of the third view image identified by the fourth temporary boundary; and
generating the top-view image by selectively using one of the first view image and the third view image with respect to the second overlap region, based on a final boundary determined according to a result of the comparing.

8. The method of any of the previous claims, wherein:
the first moving object view is one of a front view, a rear view, a left view, and a right view of the moving object, and
the second moving object view is another one of the front view, the rear view, the left view, and the right view of the moving object, which is adjacent to the first moving object view.

9. A non-transitory computer-readable storage medium storing instructions that, when executed by a processor, cause the processor to perform the method of any of the previous claims.

10. An electronic device, comprising:
one or more processors; and
a memory configured to store instructions,
wherein, in response to being executed by the one or more processors, the instructions cause the electronic device to:
receive a first view image of a first moving object view and a second view image of a second moving object view;
determine a first occlusion region in the first view image based on an obstacle in the first moving object view, and determining a second occlusion region in the second view image based on an obstacle in the second moving object view;
determine a first temporary boundary of the obstacle in the first moving object view with respect to a first overlap region between the first moving object view and the second moving object view, based on the first occlusion region;
determine a second temporary boundary of the obstacle in the second moving object view with respect to the first overlap region, based on the second occlusion region; and
generate a top-view image of the moving object based on the first temporary boundary and the second temporary boundary.

11. The electronic device of claim 10, wherein, in response to being executed by the one or more processors, the instructions cause the electronic device to, for the determination of the first occlusion region and the second occlusion region:
detect obstacle candidates disposed in the first view image by performing a semantic segmentation based on the first view image; and
determine, among the detected obstacle candidates, a region corresponding to the obstacle of the first moving object view to be the first occlusion region.

12. The electronic device of claim 10 or 11, wherein, in response to being executed by the one or more processors, the instructions cause the electronic device to generate a first partial top-view image and a second partial top-view image by warping the first view image and the second view image, respectively.

13. The electronic device of claim 12, wherein, in response to being executed by the one or more processors, the instructions cause the electronic device to, for the determination of the first temporary boundary:
set boundary candidates with respect to the first overlap region in the first partial top-view image;
determine partial regions of the first overlap region by dividing the first overlap region into the boundary candidates;
compare a first corresponding occlusion region of the first occlusion region of the first partial top-view image with the partial regions; and
determine one of the boundary candidates to be the first temporary boundary based on a result of the comparison,
wherein preferably, in response to being executed by the one or more processors, the instructions cause the electronic device to, for the comparing of the first corresponding occlusion region with the partial regions, compare the first corresponding occlusion region with the partial regions based on at least one of an area occupied by the first corresponding occlusion region in each of the partial regions and a distance between the first corresponding occlusion region shown in each of the partial regions and a representative position with respect to the first occlusion region of the moving object.

14. The electronic device of any of claims 10-13, wherein, in response to being executed by the one or more processors, the instructions cause the electronic device to, for the generation of the top-view image:
compare a visibility of the first overlap region of the first view image identified by the first temporary boundary with a visibility of the first overlap region of the second view image identified by the second temporary boundary; and
generate the top-view image by selectively using one of the first view image and the second view image with respect to the first overlap region, based on a final boundary determined according to a result of the comparing.

15. The electronic device of any of claims 10-14, wherein the first view image of the first moving object view and the second view image of the second moving object view are generated by a first camera and a second camera, respectively, the first camera and the second camera being constituents of a moving object.
